# EUROPEAN PATENT APPLICATION

(11) **EP 1 314 604 A1**
(43) Date of publication of application: **28.05.2003**
(21) Application number: 02079499.6
(22) Date of filing: 28.10.2002
(51) Int. Cl.: B60K 15/035, B60K 15/03

(54) **Fuel delivery module cover assembly**

(30) Priority: 19.11.2001 US 992082
(71) Applicant: Delphi Technologies, Inc., Troy, MI 48007 (US)
(72) Inventor: Beyer, Sharon E., Grand Blanc, MI 48439 (US); Sawert, Ulf, Grand Blanc, MI 48439 (US); Villaire, William L., Clio, MI 48420 (US); Jones, Dale R., Flushing, MI 48433 (US); Hilderbrandt, Mark J., Linden, MI 48451 (US); Davidek, Stephen J., Frankenmuth, MI 48734 (US); Catlin, Mathew L., Flushing, MI 48433 (US); Wolfenden, Mark K., Burton, MI 48529 (US)
(74) Representative: Denton, Michael John

(57) **Abstract**

A cover assembly (10) for a fuel tank (12) of a vehicle includes a cover (42) adapted to close an opening (30) in the fuel tank (12) and a common vent port (58) extending from the cover (42). The cover assembly (10) also includes a plurality of valves (92,94) attached to the cover (42) and venting through the common vent port (58).

## Description

### TECHNICAL FIELD

The present invention relates generally to fuel tanks for vehicles and, more particularly, to a cover assembly for a fuel delivery module in a fuel tank of a vehicle.

### BACKGROUND OF THE INVENTION

It is known to provide a fuel tank in a vehicle to hold fuel to be used by an engine of the vehicle. In such a fuel tank, a cover is provided for a fuel delivery module to seal the opening through which the fuel delivery module has been assembled into the fuel tank. In some cases, the fuel delivery module consists only of a cover/flange to which either an electrical fuel pump and/or a mechanism for indicating fuel is attached. Recently, the trend has been to construct fuel delivery modules with an integral reservoir. Various valves, sensors, pressure regulators, as well as filters have been added over time. In some fuel tanks, a fuel limiting vent valve and other vent valves required for venting the fuel tank are mounted in the fuel tank and then plumbed together external to the fuel tank and vented to the vehicle carbon canister.

However, with more stringent government regulations on hydrocarbon emissions being implemented, more components are being placed into the fuel tank to reduce the number of openings through the shell of the fuel tank and to minimize hydraulic connections external to the fuel tank. Because of these more stringent government regulations, vehicle manufacturers are striving to reduce external fuel tank lines and connections as well as cost.

Therefore, it is desirable to provide a cover assembly for a fuel delivery module of a fuel tank to serve as a vent manifold for all connections for venting of the fuel tank. It is also desirable to provide a cover assembly for a fuel delivery module of a fuel tank that reduces vehicle emissions for a fuel tank. It is further desirable to provide a cover assembly for a fuel delivery module of a fuel tank, which reduces external parts with the fuel tank and cost.

### SUMMARY OF THE INVENTION

It is, therefore, one object of the present invention to provide a new cover assembly for a fuel delivery module in a fuel tank of a vehicle.

It is another object of the present invention to provide a cover assembly for a fuel delivery module that provides all of the venting for a fuel tank.

To achieve the foregoing objects, the present invention is a cover assembly for a fuel delivery module in a fuel tank of a vehicle including a cover adapted to close an opening in the fuel tank and a common vent port extending from the cover. The cover assembly also includes a plurality of valves attached to the cover and venting through the common vent port.

One advantage of the present invention is that a new cover assembly is provided for a fuel delivery module in a fuel tank of a vehicle that reduces vehicle emissions by eliminating the mounting of a fuel limiting vent valve separately in the fuel tank. Another advantage of the present invention is that the cover assembly serves as a vent manifold through which all connections for venting the fuel tank are made. Yet another advantage of the present invention is that the cover assembly allows all connections through the cover and reduces vehicle emissions by eliminating external fuel lines, connections, and mating interfaces with the fuel tank. Still another advantage of the present invention is that the cover assembly can also be used to house and retain a fuel limiting vent valve and rollover valve which vents in line with the fuel limiting vent valve. A further advantage of the present invention is that the cover assembly reduces cost by reducing the number of parts.

Other objects, features, and advantages of the present invention will be readily appreciated, as the same becomes better understood, after reading the subsequent description taken in conjunction with the accompanying drawings.

### BRIEF DESCRIPTION OF THE DRAWINGS

Figure 1 is a perspective view of a cover assembly for a fuel delivery module, according to the present invention, illustrated in operational relationship with a fuel tank.
Figure 2 is a perspective view of the cover assembly and fuel delivery module of Figure 1.
Figure 3 is a fragmentary elevational view of the cover assembly and fuel tank of Figure 1.
Figure 4 is a top perspective view of the cover assembly of Figure 1.
Figure 5 is a bottom perspective view of the portion of the cover assembly of Figure 4.
Figure 6 is a fragmentary elevational view of the cover assembly of Figure 1.

### DESCRIPTION OF THE PREFERRED EMBODIMENT

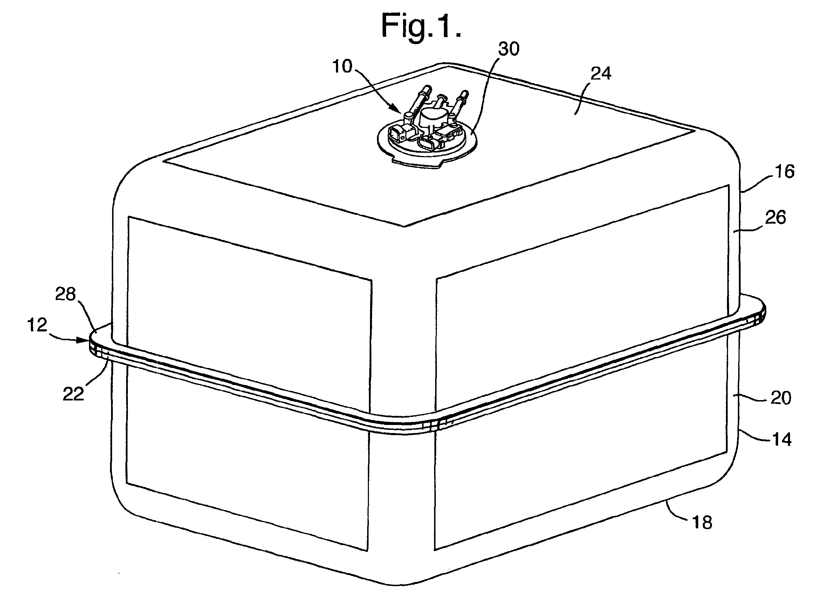

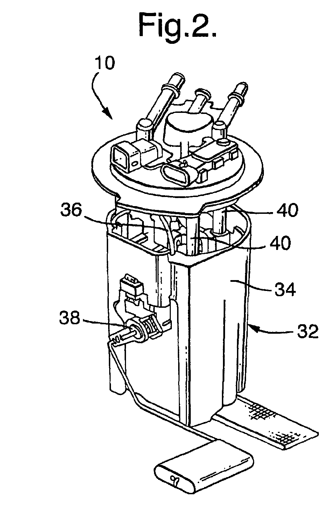

Referring to the drawings and in particular Figures 1 and 2, one embodiment of a cover assembly 10, according to the present invention, is shown for a fuel tank 12 of a vehicle (not shown). The fuel tank 12 includes a first or lower half shell 14 and a second or upper half shell 16. The lower half shell 14 has a base wall 18 and a side wall 20 around a periphery of the base wall 18 and extending generally perpendicular thereto. The side wall 20 has a flange 22 extending outwardly and generally perpendicular thereto. The upper half shell 16 has a base wall 24 and a side wall 26 around a periphery of the base wall 24 and extending generally perpendicular thereto. The side wall 26 has a flange 28 extending outwardly and generally perpendicular thereto. The flanges 22 and 28 of the lower half shell 14 and upper half shell 16, respectively, are joined together by suitable means such as by welding. The lower half shell 14 and upper half shell 16 are made of a rigid material such as plastic. The base wall 24 of the upper half shell 16 includes an opening 30 for the cover assembly 10. It should be appreciated that, except for the cover assembly 10, the fuel tank 12 is conventional and known in the art.

As illustrated in Figure 2, the cover assembly 10 is part of a fuel delivery module, generally indicated at 32. The fuel delivery module 32 is disposed in the fuel tank 12 to delivery fuel from the fuel tank 12 to an engine (not shown) of the vehicle. The fuel delivery module 32 includes a reservoir assembly 34 having an electrical fuel pump 36 mounted therein. The fuel delivery module 32 also includes a fuel level indication device 38 such as a rheostat connected to the reservoir assembly 34 for indicating the level of the fuel inside the fuel tank 12. The fuel delivery module 32 further includes a plurality of guide rods or tubes 40 to mechanically connect the cover assembly 10 with the reservoir assembly 34. It should be appreciated that, in other types of fuel delivery modules, there is no mechanical connection between the cover assembly 10 and the reservoir assembly 34 and this type of module requires a retaining mechanism on the bottom of the fuel tank 12.

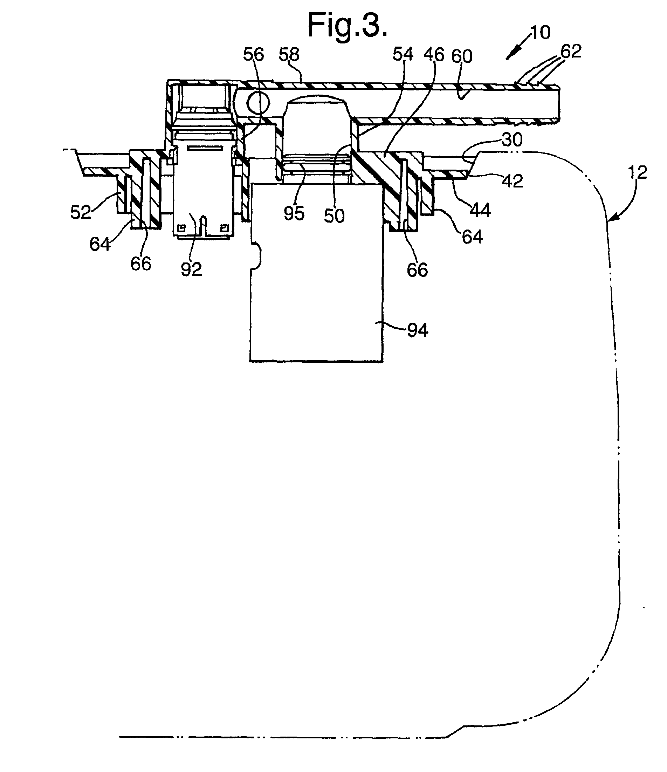

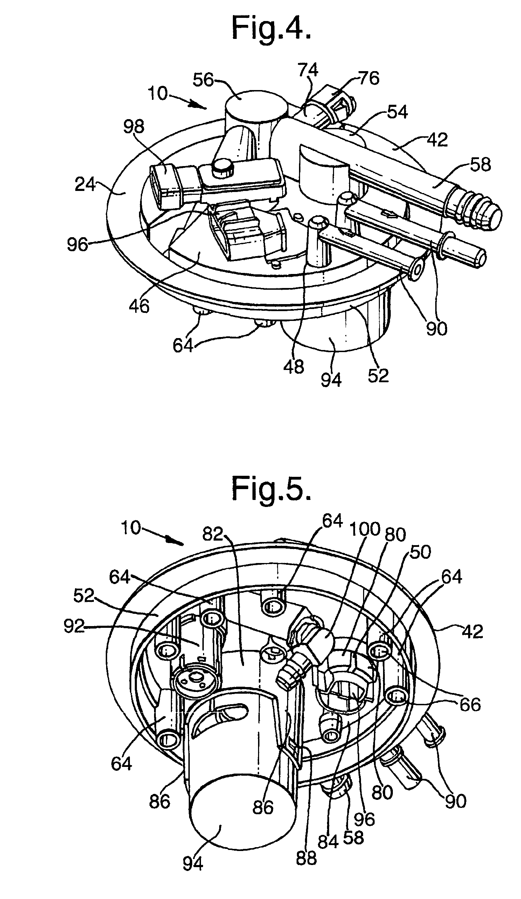

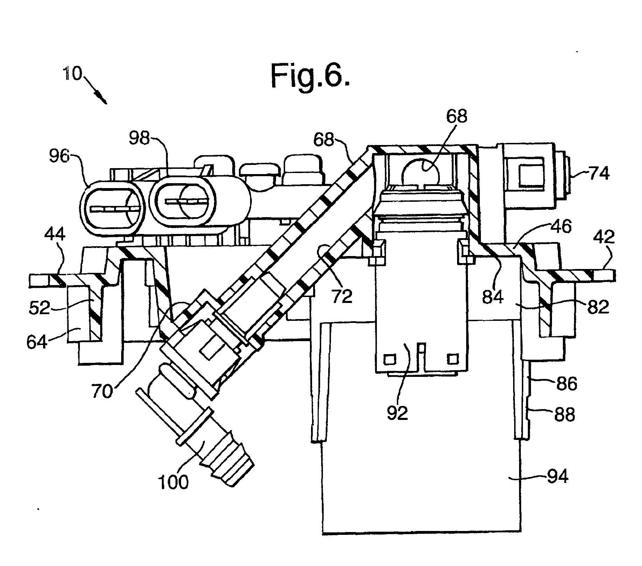

Referring to Figures 3 through 6, the cover assembly 10 includes a cover 42 to cover or close the opening 30. The cover 42 is generally circular in shape. The cover 42 includes a base wall 44 having a raised portion 46. The raised portion 46 has at least one, preferably a plurality of apertures 48,50 extending therethrough for a function to be described. The cover 42 further includes a skirt or side wall 52 extending generally perpendicular and axially from the base wall 44. The cover 42 is made from a rigid material such as plastic.

The cover 42 also has a first step 54 that is generally circular in shape and extending axially from the raised portion 46 to provide a support surface for an o-ring (not shown). The cover 42 also has a second step 56 that is generally circular in shape and extending axially from the raised portion 46 to provide a support surface for an o-ring (not shown). The cover 42 has an in series common vent port or tube 58 connected to the first step 54 and second step 56. The vent tube 58 extends radially from the first step 54 and second step 56. The vent tube 58 has a passageway 60 of a predetermined diameter such as 5/8 inches extending axially therethrough and communicating with the first step 54 and second step 56. The vent tube 58 also has a plurality of projections or barbs 62 extending radially outwardly for attachment to a conduit (not shown). It should be appreciated that the conduit is attached to a carbon canister (not shown).

The cover 42 includes at least one, preferably a plurality of guide rod retaining bosses 64. The guide rod retaining bosses 64 are generally cylindrical and circular in shape. The guide rod retaining bosses 64 have a cavity 66 extending axially therein to receive and retain the guide rods 40. The guide rod retaining bosses 64 extend axially from the base wall 44 and raised portion 46 and may extend radially from the side wall 52. It should be appreciated that the guide rod retaining bosses 64 provide rotational flexibility in the attachment of the cover assembly 10 with the reservoir assembly 34.

The cover 42 also includes an internal vent port or tube 68 extending toward the reservoir assembly 34. The internal vent tube 68 has one end connected to the first step 54 and extending downwardly at an angle to an enlarged end 70. The internal vent tube 68 has a passageway 72 extending axially therethrough and communicating with passageway 60 of the common vent tube 58. It should be appreciated that the internal vent tube 68 connects the rollover valve to the interior of the fuel tank 12.

The cover 42 includes an external vent port or tube 74 extending outwardly therefrom. The external vent tube 74 has one end connected to the common vent tube 58 and extending radially to an enlarged end 76. The external vent tube 74 has a passageway 78 extending axially therethrough and communicating with the passageway 60 of the common vent tube 58. It should be appreciated that the external vent tube 74 is external to the fuel tank 12 and in line with the fuel limiting vent valve vent path to accept a vapor recirculation line (not shown) from a filler neck (not shown). It should be appreciated that the vapor recirculation line acts to reduce the vapors generated during the filling of the fuel tank 12 by reducing the amount of external air ingested into the filler neck by allowing for the recirculation of vapors vented through the fuel limiting vent valve. It should also be appreciated that the external vent tube 74 is in line with the fuel limiting vent valve vent path to accept a remote mounted vent valve (not shown).

The cover 42 may include at least one, preferably a plurality of retaining tabs 80 disposed about at least one of the apertures 50 for a function to be described. The cover 42 also includes a cylindrical wall 82 extending axially from an interior surface 84 of the raised portion 62 for a function to be described. The cover 42 further includes at least one, preferably a plurality of retention tabs 86 with each having an aperture or window 88 extending therethrough. The retention tabs 86 are disposed about the aperture and extend axially for a function to be described. It should be appreciated that the cover 42 is a monolithic structure being integral, unitary, and one-piece.

The cover assembly 10 may include at least one, preferably a plurality of fuel tubes 90 extending into and through the apertures 48 of the cover 42. The fuel tubes 90 are connected or assembled to the cover 42 by suitable means such as molding, but may be attached by other suitable means such as welding, or mechanical retention. The cover assembly 10 may include a rollover vent valve 92 extending into and through the aperture 50 of the cover 42. The rollover vent valve 92 is located a predetermined distance such as 6.8 millimeters above the raised portion 46 to maximize venting of the fuel tank 12. The cover assembly 10 may include a fill limiting vent valve 94 extending into and through the aperture 50 in the cover 42. The cylindrical wall 82 provides sealing for an o-ring 95 attached to the fill limiting vent valve 94. The retention tabs 86 provide mechanical retention of the fill limiting vent valve 94 when snaps of the fill limiting vent valve 94 latch into the windows 88. The cover assembly 10 may include an electrical connector 96 such as a four-way electrical connector extending into and through the aperture 50. The retaining tabs 80 provide retention for the electrical connector 96. The cover assembly 10 may include an on-board diagnostic sensor 98 extending into and through the aperture 50 for diagnostic purposes. The cover assembly 10 may include a quick connector 100 having a general "L" shape with one end disposed in the enlarged end 70 of the internal vent tube 68 and the other end for connection to a vapor line form a remote mounted rollover valve (not shown). It should be appreciated that the valves 92 and 94 operate in series and vent to a charcoal canister (not shown) through the common vent tube 58. It should also be appreciated that the fuel tubes 90, rollover vent valve 92, fill limiting vent valve 94, electrical connector 96, and thermistor 98 are conventional and known in the art.

In manufacturing the cover assembly 10, the cover 42 is molded by conventional processes such as injection molding. The fuel tubes 90, rollover vent valve 92, fill limiting vent valve 94, electrical connector 96, thermistor 98, and quick connector 100 are assembled to the cover 42. The cover 42 is secured to the base wall 24 of the upper half shell 16 by suitable means. It should be appreciated that the process of securing the cover 42 to the base wall 24 is conventional and known in the art.

The present invention has been described in an illustrative manner. It is to be understood that the terminology, which has been used, is intended to be in the nature of words of description rather than of limitation.

Many modifications and variations of the present invention are possible in light of the above teachings. Therefore, within the scope of the appended claims, the present invention may be practiced other than as specifically described.

## Claims

1. A cover assembly (10) for a fuel tank (12) of a vehicle comprising:
a cover (42) adapted to close an opening (30) in the fuel tank (12);
a common vent port (58) extending from said cover (42); and
a plurality of valves (92,94) attached to said cover (42) and venting through said common vent port (58).

2. A cover assembly (10) as set forth in claim 1 wherein said common vent port (58) is in series with said valves (92,94).

3. A cover assembly (10) as set forth in claim 1 wherein said cover (42) has a base wall (44) and a side wall (52) extending from said base wall (44).

4. A cover assembly (10) as set forth in claim 3 wherein said cover (42) includes at least one guide rod retaining boss (64) connected to at least one of said base wall (44) and said side wall (52) and having a cavity (66) therein to receive a guide rod (40) of a fuel reservoir (34).

5. A cover assembly (10) as set forth in claim 3 wherein said base wall (44) has a plurality of apertures (48,50) extending therethrough.

6. A cover assembly (10) as set forth in claim 3 including at least one fuel tube (90) extending into and through at least one of said apertures (48,50) in said cover (42).

7. A cover assembly (10) as set forth in claim 3 including a rollover vent valve (92) extending into at least one of said apertures (48,50) in said cover (42) and communicating with said common vent port (58).

8. A cover assembly (10) as set forth in claim 3 including a fill limiting vent valve (94) extending into at least one of said apertures (48,50) in said cover (42) and communicating with said common vent port (58).

9. A cover assembly (10) as set forth in claim 3 including an external vent port (74) extending from said common vent port (58) and communicating therewith.

10. A cover assembly (10) as set forth in claim 3 including an internal vent port (68) extending from said cover (42) toward the fuel reservoir (34) and communicating with said common vent port (58).

11. A cover assembly (10) as set forth in claim 1 wherein said cover (42) is integral, unitary, and one-piece.

12. A cover assembly (10) for a fuel tank (12) of a vehicle comprising:
a plastic cover (42) adapted to close an opening (30) in the fuel tank (12) having a fuel reservoir (34) disposed therein;
a single common vent port (58) extending from said cover (42); and
a plurality of valves (92,94) attached to said cover (42) and venting through said common vent port (58).

13. A cover assembly (10) as set forth in claim 12 wherein said cover (42) has a base wall (44) and a side wall (52) extending from said base wall (44).

14. A cover assembly (10) as set forth in claim 13 wherein said cover (42) includes at least one guide rod retaining boss (64) connected to at least one of said base wall (44) and said side wall (52) and having a cavity (66) therein to receive a guide rod (40) of the fuel reservoir (34).

15. A cover assembly (10) as set forth in claim 13 wherein said base wall (44) has a plurality of apertures (48,50) extending therethrough.

16. A cover assembly (10) as set forth in claim 15 including a rollover vent valve (92) extending into at least one of said apertures (48,50) in said cover (42) and communicating with said common vent port (58).

17. A cover assembly (10) as set forth in claim 15 including a fill limiting vent valve (94) extending into at least one of said apertures (48,50) in said cover (42) and communicating with said common vent port (58).

18. A cover assembly (10) as set forth in claim 12 including an external vent port (74) extending from said common vent port (58) and communicating therewith.

19. A cover assembly (10) as set forth in claim 12 including an internal vent port (68) extending from said cover (42) toward the fuel reservoir (34) and communicating with said common vent port (58).

20. A fuel tank assembly comprising:
a fuel tank (12) having an opening (30) formed in a wall (24) thereof;
a fuel reservoir (34) disposed through said opening (30) and into said fuel tank (12);
a cover assembly (10) operatively connected to said fuel reservoir (34) to close said opening (30); and
wherein said cover assembly (10) comprises a cover (42) having a vent port (58) extending therefrom and a plurality of valves (92,94) attached to said cover (42) and venting through said vent port (58) to a vapor canister.
